(19) Europäisches Patentamt
European Patent Office
Office européen des brevets

(11) **EP 1 783 942 A1**

(12) **EUROPEAN PATENT APPLICATION**

(43) Date of publication:
**09.05.2007 Bulletin 2007/19**

(51) Int Cl.:
*H04L 1/00* $^{(2006.01)}$     *H04L 27/26* $^{(2006.01)}$

(21) Application number: **05292370.3**

(22) Date of filing: **08.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **MOTOROLA, INC.**
**Schaumburg, IL 60196 (US)**

(72) Inventors:
• **Muck, Markus**
**Paris 75013 (FR)**

• **Rouquette-Leveil, Stephanie**
**91300 Massy (FR)**
• **De Courville, Marc Bernard**
**75014 Paris (FR)**

(74) Representative: **Jepsen, René Pihl**
**Eltima Consulting**
**Grove House, Lutyens Close'**
**Chineham Court**
**Basingstoke, Hants RG24 8AG (GB)**

(54) **Low-density parity check coding for orthogonal frequency division multiplex systems**

(57) An OFDM transmitter (100) transmits data to a receiver (200) in OFDM symbols comprising a plurality of subcarriers. The OFDM transmitter (100) comprises an LDPC processor (103) which generates a Low-Density Parity Check (LDPC) codeword which is fed to a mapping processor (205) that maps the symbols of the LDPC codeword to the plurality of subcarriers in response to a channel estimate of a propagation channel between the OFDM transmitter (100) and the receiver (200) and a variable node degree for the symbols. The OFDM symbols are transmitted to the receiver (200) over the propagation channel by an OFDM RF transmitter (107). The invention may allow improved performance for OFDM systems using LDPC coding.

FIG. 1

EP 1 783 942 A1

**Description**

**Field of the invention**

The invention relates to Low-Density Parity Check (LDPC) coding for Orthognal Frequency Division Multiplex (OFDM) systems and in particular, but not exclusively, to OFDM based Wireless Local Area Networks (WLANs).

**Background of the Invention**

In recent years, wireless data communication in domestic and enterprise environments have become increasingly commonplace and an increasing number of wireless communication systems have been designed and deployed. In particular, the use of wireless networking has become prevalent and wireless network standards such as IEEE 801.11a™ and IEEE 801.11g™ have become commonplace.

The requirement for increasing data rates, communication capacity and quality of service has led to continued research and new techniques and standards being developed for wireless networking. As a specific example, the Institute of Electrical and Electronic Engineers (IEEE) have formed a committee for standardising a high-speed WLAN standard known as IEEE 802.11n™. The IEEE 802.11n™ standard comprises Wireles LAN Medium Access Control (MAC) and Physical Layer (PHY) Specifications aimed at enhancing WLANs to provide higher effective data throughputs. IEEE 802.11n™ is expected to operate in the 5GHz frequency spectrum and promises data rates of around 100Mbps and above on top of the MAC layer. 802.11n™ will use many techniques which are similar to the earlier developed IEEE 801.11a™ and IEEE 801.11g™ standards. The standard is to a large extent compatible with many of the characteristics of the earlier standards thereby allowing reuse of techniques and circuitry developed for these. For example, as in the previous standards IEEE 801.11a™ and IEEE 801.11g™, 802.11n™ will use Orthogonal Frequency Division Multiplex (OFDM) modulation for transmission over the air interface.

In order to improve the transmission performance, communication systems typically use suitable forward error correcting schemes. For IEEE802.11n, Low-Density Parity Check (LDPC) codes have been proposed and it has been standardized for other communication systems such as IEEE802.16e.

LDPC codes have been found to provide particularly advantageous performance in many scenarios. In particular, a very high error rate reduction can be achieved for reasonable encoding and decoding complexity leading to LDPC being particularly suitable for high performance systems.

In current systems, such as IEEE802.11n and IEEE802.16e, the performance and operation of LDPC codes are commonly designed and evaluated considering channel models of rather theoretical merit such as the AWGN (Additive-White Gaussian Noise) channel or the Rayleigh fading channel. However, this approach tends to be suboptimal and result in suboptimum performance for practical channels. In particular, it tends to result in suboptimal performance for OFDM transmissions using frequency selective channels.

Hence, an improved communication system would be advantageous and in particular an OFDM system allowing an improved usage of LDPC codes would be advantageous.

**Summary of the Invention**

Accordingly, the Invention seeks to preferably mitigate, alleviate or eliminate one or more of the above mentioned disadvantages singly or in any combination.

According to a first aspect of the invention there is provided an(Orthognal Frequency Domain Multiplex) OFDM transmitter for transmitting data in OFDM symbols comprising a plurality of subcarriers, the OFDM transmitter comprising: means for generating a Low-Density Parity Check (LDPC) codeword; mapping means for mapping symbols of the LDPC codeword to the plurality of subcarriers in response to a channel estimate of a propagation channel between the OFDM transmitter and a receiver and a variable node degree for each of the symbols; and means for transmitting the OFDM symbols to the receiver over the propagation channel.

The inventors have realised that improved performance can be achieved by assigning symbols of an LDPC codeword to subcarriers of OFDM symbols taking into account the current channel conditions and the variable node degree of the individual LDPC symbols. The variable node degree of an LDPC symbol corresponds to the number of ones in the column of the coding matrix.

The invention may in particular allow an improved performance and a reduced error rate for a given signal to noise ratio (SNR).

The symbols of the LDPC codeword may for example be mapped onto Binary Phase Shift Keying (BPSK) or Quaternary Phase Shift Keying (QPSK) subcarrier symbols.

According to an optional feature of the invention, the mapping means is arranged to map LDPC data symbols to subcarriers having higher estimated channel quality and to map LDPC redundancy symbols to subcarriers having lower estimated channel quality.

This may provide improved performance and may in particular allow an improved ratio between the error rate and the SNR. Any suitable measure of channel quality may be used and the LDPC data symbols may be mapped to subcarriers for which this measure is higher than for the subcarriers to which the LDPC redundancy symbols are mapped. Thus, the mapping may be such that the LDPC data symbols are biased towards subcarriers having higher channel quality measures and/or that LDPC redundancy symbols are biased towards subcarriers having lower channel quality measures. The channel quality measure may for example be a gain (or inverse attenuation) for the individual subcarriers.

According to an optional feature of the invention, the mapping means is arranged to map LDPC symbols having lower variable node degrees to subcarriers having higher estimated channel quality and to map LDPC symbols having higher variable node degrees to subcarriers having lower estimated channel quality.

This may provide improved performance and may in particular allow an improved ratio between the error rate and the SNR in many scenarios. The mapping may be such that LDPC symbols having a lower variable node degree are biased towards subcarriers having a higher channel quality measure and LDPC symbols having a higher variable node degree than this are biased towards subcarriers having a lower channel quality measure.

In some embodiments, the mapping means may alternatively be arranged to map LDPC symbols having higher variable node degrees to subcarriers having higher estimated channel quality and to map LDPC symbols having lower variable node degrees to subcarriers having lower estimated channel quality.

This may provide improved performance and may in particular allow an improved ratio between the error rate and the SNR in many scenarios. The mapping may be such that LDPC symbols having a higher variable node degree are biased towards subcarriers having a higher channel quality measure and LDPC symbols having a lower variable node degree than this are biased towards subcarriers having a lower channel quality measure.

According to an optional feature of the invention, the mapping means is further arranged to cyclically shift the mapping between the LDPC symbols and the subcarriers.

The mapping means may first assign the LDPC symbols having lower variable node degrees to subcarriers having higher estimated channel quality and the LDPC symbols having higher variable node degrees to subcarriers having lower estimated channel quality, and may subsequently cyclically shift the resulting allocation resulting in some LDPC symbols having lower variable node degrees are allocated to subcarriers having lower estimated channel quality. This may improve performance in some scenarios.

According to an optional feature of the invention, the channel estimate comprises individual subcarrier channel coefficients for the subcarriers.

This may allow an accurate and improved mapping that reflects the current channel conditions for the individual subcarriers. This may lead to improved performance and may in particular allow an improved ratio between the error rate and the SNR.

According to an optional feature of the invention, the mapping means is arranged to map the LDPC symbols in response to an absolute value of the subcarrier channel coefficients.

This may provide improved performance and may in particular allow an improved ratio between the error rate and the SNR. In particular, the absolute value of the channel coefficients may provide a low complexity yet highly accurate indication of the channel quality for each subcarrier. Specifically, the absolute value of the subcarrier channel coefficients may provide an accurate indication of the gain and thus the attenuation experienced for each individual subcarrier.

According to an optional feature of the invention, the mapping means comprises: means for dividing the subcarriers into a first set of subcarriers and a second set of subcarriers, the first set of subcarriers having channel estimates indicative of a higher channel quality than the channel estimates of the second set of subcarriers; and means for mapping LDPC data symbols to the first set of subcarriers and LDPC redundancy symbols to the second set of subcarriers.

This may provide a practical, low complexity and/or efficient mapping of subcarriers resulting in improved performance.

According to an optional feature of the invention, the mapping means further comprises means for mapping the LDPC data symbols to the first set of subcarriers such that LDPC data symbols having lower variable node degrees are mapped to subcarriers having channel estimates indicative of a higher channel quality than for subcarriers for LDPC data symbols having higher variable node degrees.

This may provide a practical, low complexity and/or efficient mapping of subcarriers resulting in improved performance. In particular, it may provide a practical means of mapping LDPC symbols to subcarriers such that improved performance for the specific channel conditions is achieved.

According to an optional feature of the invention, the mapping means further comprises means for mapping the LDPC redundancy symbols to the first set of subcarriers such that LDPC redundancy symbols having lower variable node degrees are mapped to subcarriers having channel estimates indicative of a higher channel quality than for subcarriers for LDPC redundancy symbols having higher variable node degrees.

This may provide a practical, low complexity and/or efficient mapping of subcarriers resulting in improved performance. In particular, it may provide a practical means of mapping LDPC symbols to subcarriers such that improved performance for the specific channel conditions is achieved.

According to an optional feature of the invention, the mapping means is arranged to map the LDPC codeword to a plurality of OFDM symbols.

The combined subcarriers of the different OFDM symbols may be considered as a common pool of subcarriers to which the OFDM symbols can be mapped according to the channel estimates and the variable node degrees. This may provide improved performance and may in particular allow an improved ratio between the error rate and the SNR.

According to an optional feature of the invention, the OFDM transmitter further comprises means for communicating mapping information of the mapping of the LDPC symbols to the subcarriers to the receiver.

This may allow an efficient implementation and/or improved performance.

According to an optional feature of the invention, the LDPC codeword is an irregular systematic codeword.

This may allow improved performance and/or facilitated implementation.

According to an optional feature of the invention, the transmitter is arranged to transmit the OFDM symbols from a plurality of antennas and the mapping means is arranged to map the LDPC symbols in response to different channel estimates for different antennas of the plurality of antennas.

This may allow improved performance and may in particular provide enhanced diversity thereby providing additional freedom in allocating LDPC symbols optimally. The OFDM transmitter may specifically be a Multiple In - Multiple Out (MIMO)transmitter.

According to an optional feature of the invention, the OFDM transmitter is arranged to operate in accordance with the Technical Specifications for a Wireless Local Area Network (WLAN).

The invention may allow improved performance for a WLAN.

According to an optional feature of the invention, the WLAN is an IEEE802.11n WLAN.

The invention may allow improved performance for an IEEE 802.11n WLAN and may be compatible with the technical specifications and/or requirements for such a system.

According to an optional feature of the invention, the OFDM transmitter further comprises: means for receiving propagation characteristics for the propagation channel from the receiver; and means for generating the channel estimate in response to the propagation characteristics.

This may allow improved performance and may in particular provide for an accurate mapping of LDPC symbols for the current channel conditions. In particular, a closed system can be implemented leading to low complexity and efficient performance.

According to an optional feature of the invention, the OFDM transmitter of any previous further comprises: means for determining propagation characteristics in response to a signal received from the receiver; and means for generating the channel estimate in response to the propagation characteristics.

The OFDM transmitter may determine the channel estimate in response to a channel estimate of a reverse propagation channel from the receiver to the OFDM transmitter. The OFDM transmitter may specifically exploit reciprocity between the propagation channel from the OFDM transmitter to the receiver and the reverse propagation channel from the receiver to the OFDM transmitter. The two propagation channels may be using the same frequency band, for example in a time divided arrangement.

According to another aspect of the invention, there is provided an OFDM receiver for receiving data in OFDM symbols comprising a plurality of subcarriers, the OFDM receiver comprising: means for receiving the OFDM symbols from a transmitter over a propagation channel; and means for generating a Low-Density Parity Check (LDPC) codeword from at least one received OFDM symbols; wherein the means for generating the LDPC codeword comprises means for mapping the plurality of subcarriers to symbols of the LDPC codeword in response to a channel estimate of the propagation channel and a variable node degree for the symbols.

According to an optional feature of the invention, the OFDM receiver further comprises: means for estimating propagation characteristics of the propagation channel in response to a signal received from the transmitter; and means for generating the channel estimate in response to the propagation characteristics.

The OFDM receiver may locally determine a channel estimate for the propagation channel and assume this channel estimate to be the same channel estimate as was used by the mapping in the OFDM transmitter. This may reduce the overhead of the communication between the OFDM transmitter and the OFDM receiver and may specifically obviate or reduce the requirement for explicit signalling of information of the mapping used by the OFDM transmitter. Thus, the OFDM transmitter may not comprise means for communicating mapping information of the mapping of the data symbols of the LDPC codeword to the subcarriers to the receiver.

According to an optional feature of the invention, the OFDM receiver further comprises means for generating a mapping between the subcarriers and the symbols of the LDPC codeword; and means for transmitting the mapping to the transmitter.

This may improve performance and/or facilitate operation.

This may improve performance and/or facilitate operation in many embodiments. The OFDM transmitter may comprise means for receiving mapping information for subcarriers and symbols of the LDPC codeword from the OFDM receiver and the mapping means may use this mapping information in the mapping.

A number of predetermined mappings may be used and the mapping information may be indicated by an indication of a specific predetermined mapping scheme.

According to another aspect of the invention, there is provided a method of transmitting data in OFDM (Orthognal Frequency Domain Multiplex) symbols comprising a plurality of subcarriers, the method comprising: generating a Low-Density Parity Check (LDPC) codeword; mapping symbols of the LDPC codeword to the plurality of subcarriers in response to a channel estimate of a propagation channel between the OFDM transmitter and a receiver and a variable node degree for the symbols; and transmitting the OFDM symbols to the receiver over the propagation channel.

These and other aspects, features and advantages of the invention will be apparent from and elucidated with reference to the embodiment(s) described hereinafter.

Brief Description of the Drawings

Embodiments of the invention will be described, by way of example only, with reference to the drawings, in which

FIG. 1 illustrates an OFDM transmitter in accordance with some embodiments of the invention,

FIG. 2 illustrates an OFDM receiver in accordance with some embodiments of the invention,

FIG. 3 illustrates an example of an OFDM communication system,

FIG. 4 illustrates an example of an LDPC coding graph;

FIG. 5 illustrates an example of a mapping of LDPC symbols to subcarriers in accordance with an embodiment of the invention, and

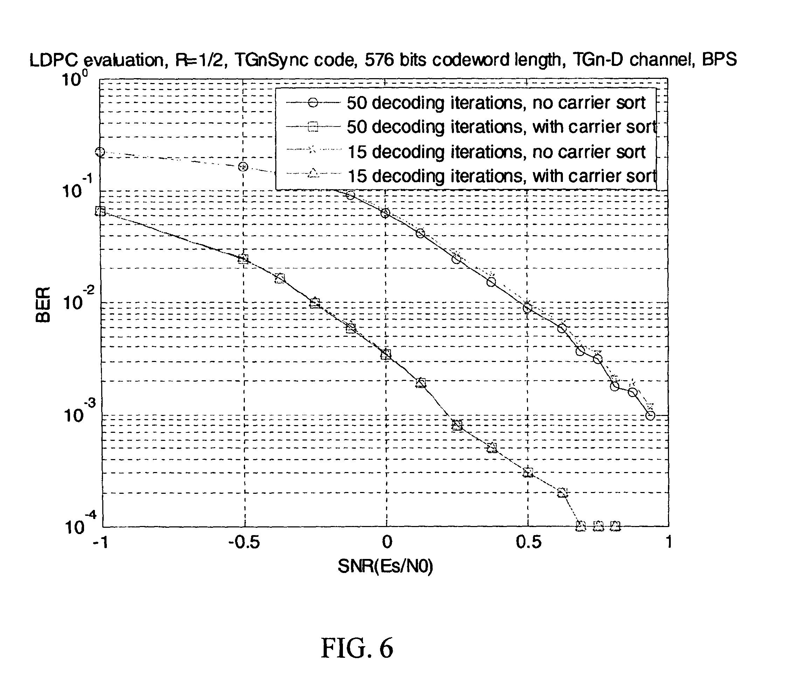

FIG. 6 illustrates simulated performance characteristics for a communication system in according with some embodiments of the invention.

**Detailed Description of Some Embodiments of the Invention**

The following description focuses on embodiments of the invention applicable to a Wireless Local Area Network (WLAN) using OFDM communication techniques and in particular to a system meeting the current IEEE 802.11n specifications and requirements. However, it will be appreciated that the invention is not limited to this application but may be applied to many other communication systems including for example OFDM based cellular communication systems.

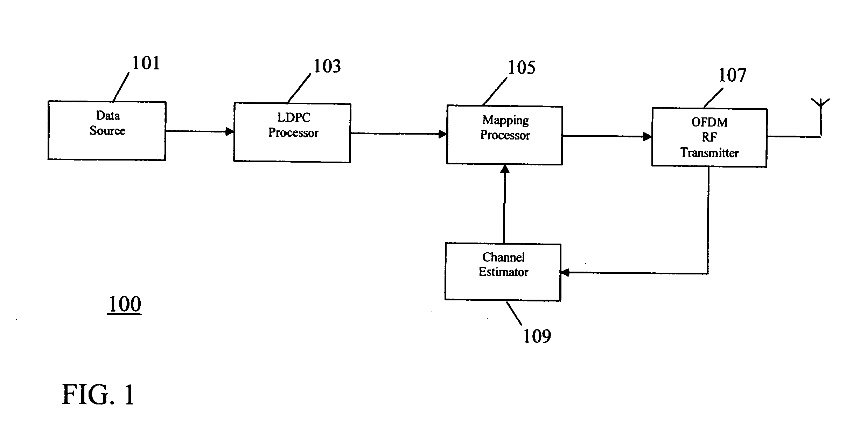

FIG. 1 illustrates an OFDM transmitter in accordance with some embodiments of the invention.

The OFDM transmitter comprises a data source 101 which provides user data to be transmitted over the air interface. The data source 101 may be any external or internal data source.

The data source 101 is coupled to an LDPC processor 103 which is arranged to apply LDPC error correcting coding to the user data received from the data source 101. In particular, the LDPC processor 103 generates a number of LDPC codewords which are to be transmitted in the OFDM symbols. The person skilled in the art will be familiar with LDPC coding and it will be appreciated that any suitable method or algorithm for performing the LDPC coding may be used.

In the OFDM transmitter, the LDPC codeword is an irregular and systematic codeword. An irregular LDPC codeword is a codeword wherein at least some of the symbols have different node degrees (i.e. are included in a different number of parity check equations). A systematic LDPC codeword is a codeword wherein at least some of the original user data symbols are directly included in the parity check equations.

The LDPC processor 103 is coupled to a mapping processor 105 which is fed the LDPC codewords. The mapping processor 105 is arranged to map the individual data symbols of the LDPC codeword to specific subcarriers of the OFDM symbols which are transmitted over the air interface.

The mapping processor 105 is coupled to an OFDM Radio Frequency (RF) transmitter 107 which transmits the OFDM symbols over the air interface to one a more receivers. In the specific example, the OFDM RF transmitter 107 is arranged to transmit in accordance with the technical specifications for IEEE802.11n.

The OFDM transmitter 100 furthermore comprises a channel estimator 109 which is coupled to the OFDM RF transmitter 107 and the mapping processor 105. The channel estimator 109 is arranged to generate a channel estimate of the propagation channel between the OFDM transmitter 100 and the receiver. Specifically, the channel estimator 109 generates individual sub channel estimates for each of the subcarriers of the OFDM symbols in the form of a channel coefficient for the carrier. Thus, a complex data symbol transmitted from the OFDM transmitter 100 will be received as a complex symbol corresponding to the transmitted symbol multiplied by the channel coefficient for the subcarrier.

In accordance with the described embodiment, the mapping processor 105 does not simply perform a pseudo-random and/or predetermined mapping between LDPC symbols and OFDM subcarriers. Rather, the mapping processor 105 is arranged to map the symbols of the LDPC codeword to the plurality of subcarriers in response to both a channel estimate of the propagation channel between the OFDM transmitter and a receiver as well as in response to the variable node degree for the individual symbols.

Specifically, the variable node degree is the number of connections leaving from a data node (i.e. variable node degree of the "i"th data bit corresponds to the number of 1s in the "i"th column of the LDPC matrix (often called "H matrix"). The LDPC matrix is given by:

$$\mathbf{Hm}_M = 0_Z$$

where the LDPC codewords $\mathbf{m}_M$ consists of $M$ bits which all satisfy $Z$ parity check equations given by the above equation.

A check node degree of the "i"th check equation corresponds to the number of 1s in the "i"th row of the LDPC matrix (often called "H matrix").

The mapping processor 105 is arranged to map the LDPC symbols to subcarriers such that the symbols which have a higher effect on the decoding performance are mapped to subcarriers for which the channel estimate indicates that a higher quality channel is present.

Specifically, the channel estimator 109 can generate a single channel coefficient for each of the subcarriers of the OFDM symbols. The absolute value of this channel coefficient can then be obtained and used as an indication of the estimated gain and thus attenuation for the transmissions in this specific subcarrier. Hence, the absolute value of the channel coefficients of the individual subcarriers provides a good indication of the quality of the propagation channel for that subcarrier.

Specifically, the higher the absolute value of the channel coefficient, the higher the channel quality is considered to be.

It will be appreciated that other channel quality measures can be used. For example, a signal to noise ratio can be determined for each subcarrier and an increasing channel quality can be considered to be indicated by an increasing signal to noise ratio.

Thus, in the example of FIG. 1, the channel estimator 109 feeds the mapping processor 105 a channel quality indication for each subcarrier in the form of the gain measure determined as the absolute value of the estimated channel coefficient

The mapping processor 105 then proceeds to map the symbols of the LDPC codeword to the different subcarriers taking this channel quality indication into account.

Specifically, the mapping processor 105 is arranged to map the LDPC symbols such that LDPC data symbols are allocated to subcarriers having higher channel quality indications then the LDPC redundancy symbols.

Specifically, for a symmetric LDPC codeword, the codeword comprises the original user data to be transmitted as well as a number of redundancy symbols which are determined by the LDPC processor 103 such that the parity checks equals zero. Thus, for a symmetric LDPC codeword comprising N data symbols and M redundancy symbols selected to result in zero parity check equations, the mapping processor 105 can first select the N subcarriers with the best channel quality indications (e.g. with the highest absolute value of the channel coefficients) and can map the N data symbols to these subcarriers. It can then select the M subcarriers having the next highest channel quality indications and map the M redundancy symbols to these.

Thus, the mapping processor 105 is arranged to bias the mapping of LDPC data symbols towards subcarriers having better channel quality indications and to bias the mapping of LDPC redundancy symbols towards subcarriers having worse channel quality indications.

The mapping processor 105 furthermore maps the LDPC symbols of the LDPC codeword in response to the variable node degree of the individual symbol. The variable node degree corresponds to the number of ones in the column of the LDPC encoding matrix for this specific symbol of the codeword. This is equivalent to the number of parity checks in which the individual symbol is included.

Specifically, the mapping processor 105 maps the symbols such that the LDPC symbols with lower variable node degrees are biased towards the subcarriers having better channel quality indications (e.g. the higher absolute values of the channel coefficients). For example, if the LDPC codeword comprises K symbols having a variable node degree of X, and L symbols having a variable node degree of Y where X<Y, the mapping processor 105 can first select the K subcarriers having the highest channel quality indication and map the K symbols with variable node degree of X to these. It can then proceed to select the next L subcarriers and map the L symbols with variable node degree of Y to these.

In the example of FIG. 1, the mapping processor 105 first maps the symbols depending on the type of symbol (e.g. whether it is a data/redundancy symbol) and then maps depending on the variable node degree.

Specifically, the mapping processor 105 first divides the subcarriers into a first set of N subcarriers and a second set of M subcarriers where the first set of subcarriers have channel estimates indicative of a higher channel quality than the channel estimates of the second set of subcarriers. The LDPC data symbols are then allocated to the N subcarriers of the first set and the LDPC redundancy symbols are allocated to the M subcarriers of the second set.

Within each set the mapping processor 105 then maps the symbols of the set to the subcarriers depending on the variable node degree of the symbols. For example, the LDPC data symbols of the first set can be ordered in accordance with the variable node degree and the symbols having the lowest variable node degree are mapped to the subcarriers having the highest channel quality indication. The symbols having the next lowest variable node degree are then mapped to the unallocated subcarriers having the highest channel quality indication and so on. The same approach can then be applied to the redundancy symbols of the second set.

It will be appreciated that in this example the type of LDPC symbol is prioritised higher than the variable node degree in the mapping but that it is equally possible to prioritise the variable node degree higher than the type of LDPC symbol.

Thus, the OFDM transmitter 100 of FIG. 1 provides a low complexity yet highly efficient mapping of LDPC codeword symbols to individual subcarriers such that the performance for the specific channel conditions currently experienced can be optimised resulting in reduced error rates and improved performance of the communication system as a whole.

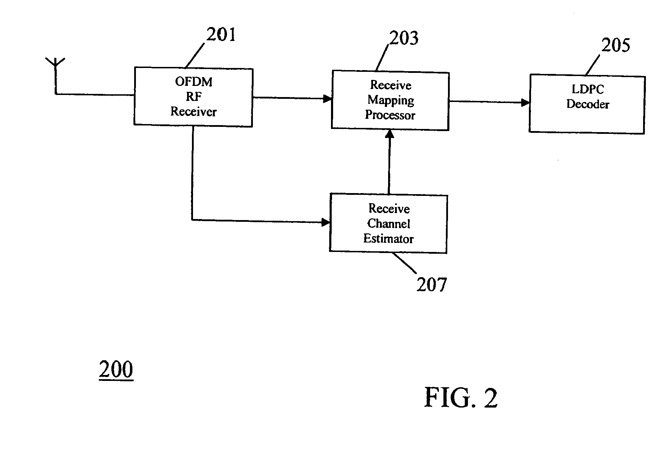

FIG. 2 illustrates an OFDM receiver 200 in accordance with some embodiments of the invention. The OFDM receiver 200 is arranged to receive the communication from the OFDM transmitter 100.

The OFDM receiver 200 comprises an OFDM RF receiver 201 which receives the OFDM symbols from the OFDM transmitter 100.

The OFDM RF receiver 201 is coupled to a receive mapping processor 203 which is arranged to perform the inverse mapping by the OFDM transmitter 100. Thus, the receive mapping processor 203 maps the subcarriers of the received OFDM symbols to the appropriate places in the LDPC codeword.

The OFDM RF receiver 201 is furthermore coupled to a received channel estimator 207 which generates channel estimate information corresponding to that used by the mapping processor 105 of the OFDM transmitter 100. In the specific example, the received channel estimator 209 generates an absolute value of estimated channel coefficients for the individual subcarriers of the propagation channel from the OFDM transmitter 100 to the OFDM receiver 200.

The LDPC codeword generated by the receive mapping processor 203 is then fed to an LDPC decoder 205 which performs LDPC decoding in accordance with any suitable algorithm or method. Various algorithms for LDPC decoding are well known to the person skilled in the art and will not be described further herein.

Thus, a low complexity receiver is provided which is arranged to perform the inverse operations of the described techniques for the OFDM transmitter 100.

It will be appreciated that any suitable means of generating channel estimates for the transmitter and/or receiver can be used without detracting from the invention.

As a specific example, the system may operate in a closed loop configuration wherein the OFDM receiver 200 generates channel estimates for the individual subcarriers of the received OFDM symbols from the transmitter 100. It will be appreciated that many different techniques are known for generating a channel estimate for a received signal. For example, the OFDM receiver 200 can determine the channel coefficients for the propagation channel from the OFDM transmitter 100 to the OFDM receiver 200 in response to known data embedded in the OFDM symbols (i.e. from training data).

In this example, the OFDM receiver 200 further comprise transmitter means which are arranged to transmit the determined channel coefficients back to the OFDM transmitter 100. This will provide for a low complexity and robust way of determining the channel estimates for the propagation channel as well as automatically ensuring that the same channel information is used for both the transmit and receive mapping.

In other embodiments, the OFDM transmitter 100 independently determines suitable channel estimates and transmits explicit mapping information to the OFDM receiver 200. The OFDM receiver 200 can then use this mapping information as the channel estimates that are used to control the mapping performed by the receive mapping processor 203.

It will be appreciated, and in such embodiments the OFDM transmitter 100 can transmit e.g. the actual channel coefficients used for the mapping process or can transmit other information that allows the receiver to perform the inverse mapping. Thus, the mapping information may be an explicit indication of which LDPC symbols are allocated to which subcarriers and this information can be directly used by the receive mapping processor 203. Thus, the channel estimates used by the receive mapping processor 203 need not be explicit channel estimates but can be indirect indications of the mapping (and thus channel estimates) used by the mapping processor 105 of the OFDM transmitter 100.

In some embodiments, the OFDM transmitter 100 and/or the OFDM receiver 200 can exploit reciprocity between propagation channels from the OFDM transmitter 100 to the OFDM receiver 200 and from the OFDM receiver 200 to the OFDM transmitter 100.

Specifically, the OFDM transmitter 100 can be part of a first transceiver communicating with a second transceiver comprising the OFDM receiver 200 using a time division duplex scheme wherein the two transceivers take turns in transmitting to the other transceiver. In this case, the propagation channels in the two directions are reciprocal and thus the two transceivers can determine propagation characteristics and channel estimates from the signals received from the other transceiver. These locally determined estimates can then be used for both the transmit and receive mapping of the individual transceiver.

It will be appreciated that in some embodiments, the receiver 200 can comprise means for determining the mapping information which is to be used by the transmitter. This, information can then be transmitted back to the transmitter 100 where it can be applied by the mapping processor 105.

The communication of the mapping information can be achieved by an indication of a selected mapping scheme out of a number of predetermined mapping schemes. This, a limited number of predefined mappings can be used where the receiver 200 can simply select the most appropriate mapping scheme.

It will be appreciated, that the LDPC codewords can be mapped to a plurality of OFDM symbols. For example, an LDPC codeword can comprise 2N symbols where N is the number of subcarriers of each OFDM symbol used for user data communication. In this case, the mapping processor 105 can map the 2N symbols to two OFDM symbols. This mapping can be such that the 2N effective subcarriers of the two OFDM symbols are considered as a single homogenous pool of subcarriers to which the mapping processor 105 can freely map the LDPC symbols. Thus, the LDPC data symbols can be mapped to the best subcarriers across the two symbols and the redundancy symbols can be mapped to the worst subcarriers across the two symbols.

It will also be appreciated, but the system is applicable to systems using multiple transmit and receive transmitters. Such systems are generally known as Multiple In Multiple Out (MIMO) systems. In such systems, different propagation channels are experienced from the different transmit antennas and the mapping processor 105 can map the LDPC symbols to the subcarriers of the different antennas depending on the individual channel estimate for the individual antenna.

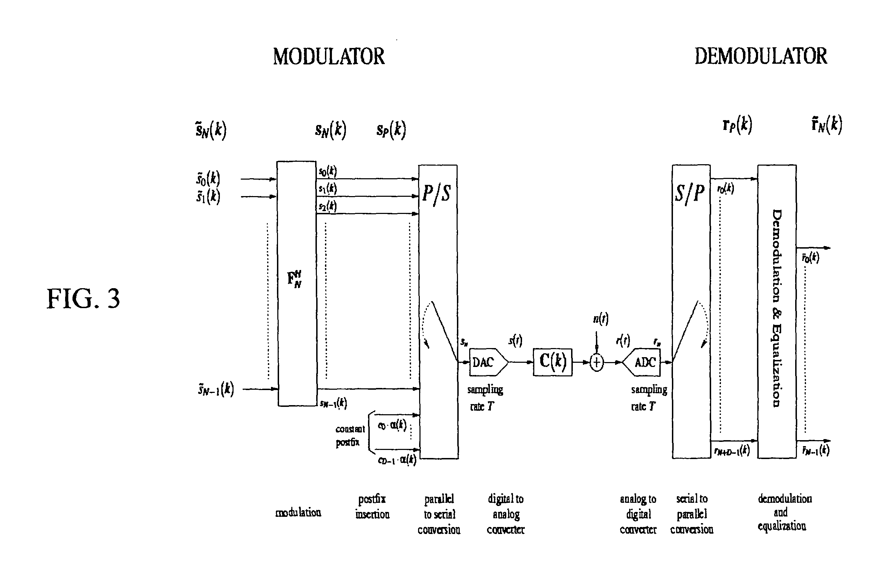

In the following, a detailed example of a system in accordance with the above approach will be described. The system will be described with reference to the OFDM system illustrated in FIG. 3.

We consider an $N$ carrier OFDM system. The $i$th $N \times 1$ input digital vector $\tilde{\mathbf{s}}_N(i)$ is first modulated by the IFFT matrix $\mathbf{F}_N^H = \frac{1}{\sqrt{N}} \left( W_N^{ij} \right)^H$, $0 \leq i < N$, $0 \leq j < N$ and $W_N = e^{-j\frac{2\pi}{N}}$. In the case of standard Cyclic Prefix OFDM (CP), a cyclic repetition of the time domain samples is introduced prior to transmission:

$$\mathbf{s}_P(i) = \mathbf{F}_{CP}^H \tilde{\mathbf{s}}_N(i) , \quad \mathbf{F}_{CP}^H = \begin{bmatrix} \mathbf{0}_{D,N-D} & \mathbf{I}_D \\ \mathbf{I}_N & \end{bmatrix}_{P \times N} \mathbf{F}_N^H .$$

The samples of $\mathbf{s}_P(i)$ are then sent sequentially through the channel modelled here as a L th-order FIR

$$C(z) = \sum_{n=0}^{L} c_n z^{-n}$$ of impulse response $(c_0, \cdots, c_L)$. The OFDM system is designed such that the postfix duration exceeds the channel memory $L \leq D$.

Let $C_{ISI}(P)$ and $C_{IBI}(P)$ be respectively the Toeplitz inferior and superior triangular matrices of first column: $[c_0, c_1, ..., c_L, 0, \rightarrow, 0]^T$ and first row $[0, \rightarrow, 0, c_L, ..., c_1]$. As already explained in A. Akansu, P. Duhamel, X. Lin, and M. de Courville. Orthogonal Transmultiplexers in Communication : A Review. IEEE Trans. on Signal Processing, 463(4):979-995, April 1998, the channel convolution can be modelled by:

$$\mathbf{r}_P(i) = \mathbf{C}_{ISI}(P)\mathbf{s}_P(i) + \mathbf{C}_{IBI}(P)\mathbf{s}_P(i-1) + \mathbf{n}_P(i)$$

After prefix truncation, the received expression is with $\mathbf{C}_{CIRC}(N) = \mathbf{C}_{IBI}(N) + \mathbf{C}_{ISI}(N)$ :

$$\mathbf{r}_N(i) = \mathbf{C}_{CIRC}(N)\mathbf{s}_N(i) + \mathbf{n}_N(i)$$

$$= \mathbf{F}_N^H \tilde{\mathbf{D}}_C \tilde{\mathbf{s}}_N(i) + \mathbf{n}_N(i)$$

$$\tilde{\mathbf{r}}_N(i) = \tilde{\mathbf{D}}_C \tilde{\mathbf{s}}_N(i) + \tilde{\mathbf{n}}_N(i)$$

with $\tilde{\mathbf{r}}_N(i) = \mathbf{F}_N \mathbf{r}_N(i)$ and $\tilde{\mathbf{n}}_N(i) = \mathbf{F}_N \mathbf{n}_N(i)$. The circulant channel matrix $\mathbf{C}_{CIRC}(N) = \mathbf{F}_N^H \tilde{\mathbf{D}}_C \mathbf{F}_N$ is diagonal on a Fourier basis with $\tilde{\mathbf{D}}_C = diag\{\mathbf{F}_N[c_0, c_1, \cdots, c_L, 0, \rightarrow, 0]^T\}$. $diag\{\cdot\}$ transforms a vector into a diagonal matrix. Thus, each carrier is weighted by its corresponding complex channel coefficient given in

$$\tilde{\mathbf{D}}_C = diag\{\tilde{c}_0, \cdots, \tilde{c}_{N-1}\} \ .$$

The user data transmitted by the OFDM symbols are coded by an LDPC code.

A regular LDPC code characterized by the parameter set $(Z, t_c, t_r)$ is a linear block code of length $Z$ defined by a sparse parity check matrix **H** of dimension $Z \times M$ with $Z = \frac{t_c}{t_r} M$ (ref. e.g. R.G. Gallager. Low-Density Parity-Check Codes. IRE Transactions on Information Theory, IT-8:21-28, 1962). The codewords $\mathbf{m}_M$ consists of $M$ bits which all satisfy $Z$ parity check equations:

$$\mathbf{Hm}_M = 0_Z$$

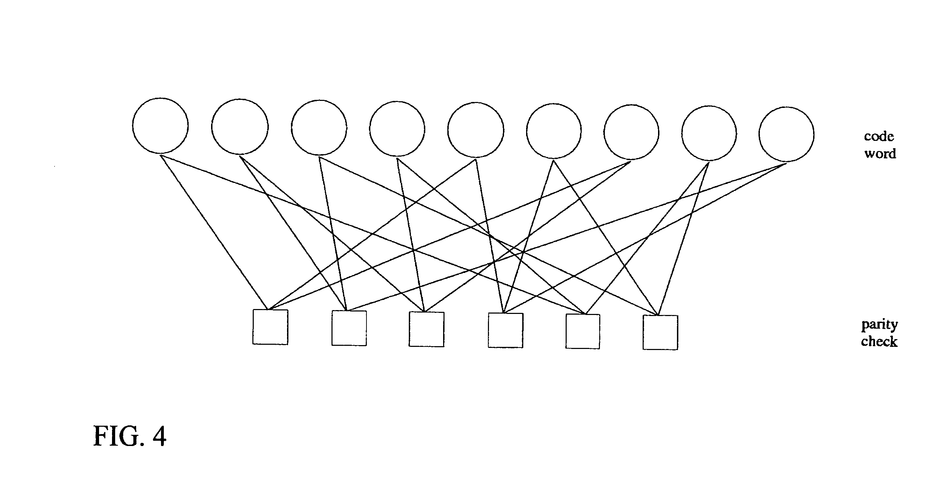

There are $K = M-Z$ information bits and the code rate is $R \geq 1 - \frac{t_c}{t_r}$ (there only is equality if the matrix **H** is full rank). Such a code can be graphically represented by a so-called *factor graph.* FIG. 4 illustrates such a graph for ($M$=9, $t_c$=2, $t_r$=3) (see Valérian Mannoni. Optimisation des codes LDPC pour les communications multi-porteuses. PhD thesis, Univeristy of Reims, Champagne-Ardenne, France, June 2004 for the corresponding H matrix).

This representation helps to identify *cycles* of length $v$ which is a path comprising $v$ edges closing back on itself. An important code design parameter is the *girth* of a graph: it defines the minimum cycle length of a graph and should be as large as possible (note that the optimization of LDPC codes is typically performed under the *local* tree *assumption,* i.e. the girth is assumed to be large enough such that the sub-graph forms a tree and the incoming messages to every node are therefore independent).

A further generalization of LDPC codes has been introduced by M. Luby, M. Mitzenmacher, A. Shokrollahi, and D. Spielmann. Analysis of low-density codes and improved designs using irregular graph. Proc. 30th Annual ACM Symposium on Theory of Computing, pages 249-258, 1998 with *irregular* LDPC codes characterized by a non-uniform distribution of '1's over the rows and columns of the H matrix. This article shows that good irregular codes outperform regular ones. Typically, the code is represented by two polynomials:

$$\lambda(x) = \sum_{i=2}^{t_{c,max}} \lambda_i x^{i-1}$$

$$\rho(x) = \sum_{j=2}^{t_{r,max}} \rho_j x^{j-1}$$

$\lambda_i$ ($\rho_j$) respectively represent the percentage of branches connected to data nodes (check nodes) of degree $i$ ($j$). $t_{c,max}$ ($t_{r,max}$) is the maximum variable node degree of data nodes (check nodes). Both polynomials are linked to each other via the code rate $R$ : $(1-R)\sum_{i=2}^{t_{c,max}} \frac{\lambda_i}{i} = \sum_{j=2}^{t_{r,max}} \frac{\rho_j}{j}$ . In a another common representation, $\lambda_i$ is replaced by

$\tilde{\lambda}_i = \dfrac{\lambda_i/i}{\sum\limits_{k=2}^{t_{c,max}} \lambda_k/k}$ and $\rho_i$ is replaced by $\tilde{\rho}_i = \dfrac{\rho_i/i}{\sum\limits_{k=2}^{t_{r,max}} \rho_k/k}$ .

In the example, *systematic* LDPC codes are considered. The corresponding generating matrix G of the LDPC code is applied to the initial vector of information (data) bits b as follows: **m=Gb** with **HG**=0. Moreover, the analysis is limited to binary LDPC codes (i.e. all elements are $\in GF(2)$). Non-binary codes with elements $\in GF(Q)$ have been proven to provide improved performances, but require a decoding complexity which rises exponentially with $q=log_2(Q)$ (ref. e.g. David Declercq. Optimisation et performances des codes LDPC pour des canaux non-standards. Habilitation Thesis, University of Cergy-Pontoise, France, 2003).

In the example LLR messages are considered in combination with received carrier amplitudes r:

$$v = log \frac{p(r|x=1)}{p(r|x=-1)}$$

are the output messages of variable node where x is the bit value of the corresponding node. Likewise, the output messages of a check node are defined as

$$u = log \frac{p(r'|x'=1)}{p(r'|x'=-1)}$$

where *x'* is the bit value of the variable node arriving from the check node and *r'* contains all information available to a check node up to the present iteration. Under sum-product decoding (see Sae-Young Chung, T. J. Richardson, and R. Urbanke. Analysis of Sum-Product Decoding Low-Density Parity-Check Codes Using a Gaussian Approximation. IEEE Transactions on Information Theory, 47:657-670, 2001), $v$ is equal to the sum of all incoming LLRs:

$$v = u_0 + \sum_{i=1}^{d_v-1} u_i$$

where $u_0$ is the observed LLR of the decoded bit and $u_i, i=1,\cdots,d_v$-1 represent all incoming LLRs from neighbours of the variable node except the check node that will get the message $v$ (i.e. its input must be independent of its previous output). The *u* messages are then recalculated based on the so-called tanh rule [ref.: J. Hagenauer, E. Offer, and L. Papke. Iterative decoding of binary block and convolutional codes. IEEE Transactions on Information Theory, 42:429-445, 1996 and C. R. Hartmann and L. D. Rudolph. An optimum symbol-by-symbol decoding rule for linear codes. IEEE Transactions on Information Theory, IT-22:514-517, 1976):

$$\tanh\left(\frac{u}{2}\right) = \prod_{j=1}^{d_c-1} \tanh\left(\frac{v_j}{2}\right)$$

where $v_j, j = 1,\cdots, d_c$-1 are the incoming LLRs from the $d_c$-1 neighbours of a check node. Note that the message of the node itself ($j=0$) is omitted in the product calculation.

In the case of QPSK mapping, Valérian Mannoni. Optimisation des codes LDPC pour les communications multi-porteuses. PhD thesis, Univeristy of Reims, Champagne-Ardenne, France, June 2004 shows that the messages corresponding to the real (imaginary) part of the $k^{th}$ OFDM carrier is $u_{0.2k}$ ($u_{0,2k+1}$) and depends on the frequency domain channel coefficient $c_k$ and the noise variance $\sigma_{n,k}^2$ as well as the noise amplitude $n_k$ of the corresponding carrier:

$$u_{0,2k} = \frac{4|c_k|^2}{\sigma_{n,k}^2} + \frac{4}{\sigma_{n,k}^2}\Re\{c_k^{\AA}n_k\}$$

$$u_{0,2k+1} = \frac{4|c_k|^2}{\sigma_{n,k}^2} + \frac{4}{\sigma_{n,k}^2}\Im\{c_k^{\AA}n_k\}$$

$\Re (\cdot)$ ($\Im (\cdot)$) represents the real (imaginary) part of the argument. The corresponding distribution is Gaussian, symmetric and consistent (i.e. $f(x)=exf(-x)\forall x \in R$ ) :

$$f_{u_{0,2k}} = f_{u_{0,2k+1}} = N\left(\frac{4|c_k|^2}{\sigma_{n,k}^2}, \frac{8|c_k|^2}{\sigma_{n,k}^2}\right)$$

In the following a specific example of the mapping of the LDPC codeword symbols to the subcarriers is described. For brevity and clarity only BPSK constellations are considered. However, the method is straightforwardly extended to other constellation types.

Moreover, we assume that all $M$ bits of an LDPC code-word $\mathbf{m}_M$ (its first $K=M-Z$ entries $\mathbf{m}_K^{\text{Data}}$ consist of information bits (LDPC data bits) followed by $Z$ redundancy bits $\mathbf{m}_Z^{\text{Red}}$ ) fit into P OFDM symbols. Each OFDM symbol consists of N carriers, of which $\bar{N} \le N$ are attributed to data symbols, i.e. $M = P\bar{N}$. The channel coefficients of the $\bar{N}$ used OFDM data carriers are grouped in the vector $\tilde{\mathbf{c}}_{\bar{N}}=[\tilde{\mathbf{c}}_0,\cdots,\tilde{\mathbf{c}}_{\bar{N}-1}]^T$. The node variable node degree (i.e. the number of ones in the column of the LDPC code H matrix corresponding to a specific code-word bit) of all $M$ code-word bits shall be contained in a vector $\mathbf{w}_M$; its first $K=M-Z$ entries $\mathbf{w}_K^{\text{Data}}$ are linked to data bits while the remaining ones $\mathbf{w}_Z^{\text{Red}}$ are linked to redundancy bits.

The following algorithm can be used to map the M LDPC code-word bits onto all P OFDM symbols:

i) Duplicate the complex valued channel coefficients vector $\tilde{\mathbf{c}}_{\bar{N}} = [\tilde{c}0,\cdots, \tilde{\mathbf{c}}_{\bar{N}-1}]^T$ P times and keep the result in the

vector $\tilde{\mathbf{c}}_{P\bar{N}} = \left[\underbrace{\tilde{\mathbf{c}}_{\bar{N}}^T,\cdots,\tilde{\mathbf{c}}_{\bar{N}}^T}_{P\,times}\right]^T$ .

ii) With $|\tilde{\mathbf{c}}_{\bar{N}}|=[|\tilde{c}_0|,\cdots|\tilde{c}_{\bar{N}-1}|]^T$, sort $|\tilde{\mathbf{c}}_{\bar{N}P}|$ starting with the smallest element (up to the largest one); the vector $\mathbf{p}_{|\tilde{\mathbf{c}}_{P\bar{N}}|}=[p_0,\cdots,p_{P\bar{N}-1}]^T$ shall contain the sorting result as integer elements: $p_0$ points to the position in $|\tilde{\mathbf{c}}_{P\bar{N}}|$ with the smallest

element, etc.

<u>iii)</u> Split the pointer vector $\mathbf{p}_{|\tilde{c}P\bar{N}|} = [p_0, \cdots, p_{P\bar{N}-1}]^T$ into two parts: $\mathbf{p}_{|\tilde{c}_{P\bar{N}}|}^{Red} = \left[ p_0, \cdots, p_{Z-1} \right]^T$ contains pointers to the channel coefficients that will be assigned to redundancy bits and $\mathbf{p}_{|\tilde{c}_{P\bar{N}}|}^{Data} = \left[ p_Z, \cdots, p_{P\bar{N}-1} \right]^T$ contains pointers to the channel coefficients that will be assigned to data bits.

<u>iv)</u> Sort $\mathbf{w}_K^{Data}$ and $\mathbf{w}_Z^{Red}$ correspondingly; the resulting pointers shall be contained in the vectors $\mathbf{u}_{\mathbf{w}_K^{Data}}$ and $\mathbf{u}_{\mathbf{w}_Z^{Red}}$ respectively (the first element of $\mathbf{u}_{\mathbf{w}_K^{Data}} / \mathbf{u}_{\mathbf{w}_Z^{Red}}$ points to the smallest value in $\mathbf{w}_K^{Data} / \mathbf{w}_Z^{Red}$ etc.).

<u>v)</u> Defining $(\cdot)^F$ as an operator that reads a vector in inverse order, attribute the OFDM symbol and carrier number indicated by the pointer vector $\mathbf{p}_{|\tilde{c}_{P\bar{N}}|}^{Data} = \left[ p_Z, \cdots, p_{P\bar{N}-1} \right]^T$ (the OFDM symbol number of entry $p_n$ is $floor(p_n/\bar{N})$ and the carrier number among the $\bar{N}$ useful carriers is $p_n$ mod $\bar{N}$) to the data bits $\mathbf{m}_K^{Data}$ indicated by the pointer vector $\left( \mathbf{u}_{\mathbf{w}_K^{Data}} \right)^F$. I.e. the variable nodes of data bits with the lowest node variable node degree are attributed to the strongest channel coefficients. In the same way, attribute the OFDM symbol and carrier number indicated by the pointer vector $\mathbf{p}_{|\tilde{c}_{P\bar{N}}|}^{Red} = \left[ p_0, \cdots, p_{Z-1} \right]^T$ to the redundancy bits $\mathbf{m}_Z^{Red}$ indicated by the pointer vector $\left( \mathbf{u}_{\mathbf{w}_Z^{Red}} \right)^F$.

<u>vi)</u> All data and redundancy bits shall be mapped onto BPSK symbols; these symbols shall be transmitted on the OFDM symbol number and carrier number derived in point v).

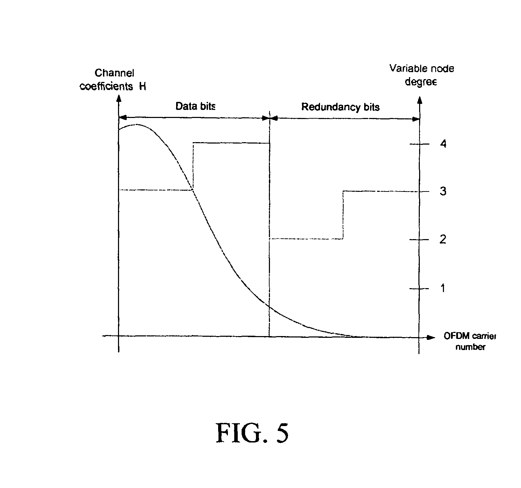

Thus, the upper algorithm maps the redundancy bits onto the sub-carriers with the greatest attenuation by the propagation channel. The data bits are mapped onto the subcarriers with the smallest attenuation by the propagation channel. Within each of these two sub-sets, the nodes with the highest variable node degree are attributed to the weakest carriers within the sub-set and the nodes with the lowest variable node degree are attributed to the strongest carriers within the sub-set. This is illustrated in FIG. 5 for the example of a given propagation channel and of an LDPC code (assumed to fit into one OFDM symbol) where the variable nodes of the data bits are of order 3 and 4 and the variable nodes of the redundancy bits are of order 2 and 3:

$$\lambda(x) = \underbrace{\frac{1}{4}x^2 + \frac{1}{4}x^3}_{data\ bits} + \underbrace{\frac{1}{4}x^2 + \frac{1}{4}x}_{check\ bits}$$

The corresponding assignment of code-word bits to carriers can be communicated from the transmitter to the receiver in order to enable the receiver to decode the data.

Simulations have confirmed that the described approach can provide substantial performance improvements over conventional systems. Specifically, simulations have been performed for an IEEE802.11n system showing that a performance improved of around 1.5 dB can be achieved as illustrated in FIG. 5

In the following an approach for deriving a suitable LDPC code assuming the channel is known will be described followed by this description being extended to the case where channel coefficients are estimated and are thus only approximations of the true channel. Moreover, the context of a time-variant channel scenario is considered.

The optimization of LDPC codes is based on the *Gaussian Approximation* assumption which has been studied and validated in Young Chung, T. J. Richardson, and R. Urbanke. Analysis of Sum-Product Decoding Low-Density Parity-Check Codes Using a Gaussian Approximation. IEEE Transactions on Information Theory, 47:657-670, 2001 due to its inherent low-complexity implementation properties. However, instead of performing an asymptotic threshold optimization (i.e. a joint search for a H matrix and a minimum SNR level which lead to error free decoding properties if the matrix size and the number of decoding iterations tends towards infinity) we apply the idea of Valérian Mannoni. Optimisation des codes LDPC pour les communications multi-porteuses. PhD thesis, Univeristy of Reims, Champagne-Ardenne, France, June 2004 to optimize the error probability of useful data bits with a fixed number of iterations.

Denoting the mean values of $u(v)$ by $m_u$ $(m_v)$, the update equation at iteration $l$ becomes for every node with $d_v$ branches (ref. Sae-Young Chung, T. J. Richardson, and R. Urbanke. Analysis of Sum-Product Decoding Low-Density Parity-Check Codes Using a Gaussian Approximation. IEEE Transactions on Information Theory, 47:657-670, 2001):

$$m_v^{(l)} = m_{u_0} + (d_v - 1)m_u^{(l-1)}$$

with $m_u^{(0)} = 0$ . I.e. the arriving messages to each node are assumed to be identical for the whole graph. The difference lies in the fact that more messages are arriving the higher order nodes and thus the corresponding bit reliabilities are improved. For $m_u^{(l)}$ the tanh rule leads to the following expression (ref. Sae-Young Chung, T. J. Richardson, and R. Urbanke. Analysis of Sum-Product Decoding Low-Density Parity-Check Codes Using a Gaussian Approximation. IEEE Transactions on Information Theory, 47:657-670, 2001):

$$E\left[\tanh\left(\frac{u^{(l)}}{2}\right)\right] = \left[\tanh\left(\frac{v^{(l)}}{2}\right)\right]^{d_c-1}$$

In the case of OFDM systems, the initial LLR message depends on the channel coefficient $c_k$ of the corresponding carrier $k$ providing the bit information: $M_{u_0} = m_{u_0}(c_k)$. Valérian Mannoni. Optimisation des codes LDPC pour les communications multi-porteuses. PhD thesis, Univeristy of Reims, Champagne-Ardenne, France, June 2004 further derives the updating equation of $m_u^{(l)}$ based on an approximation of c by approximation of c by a step-function characterized by a constant channel coefficient per step and representing each step by a corresponding LDPC sub-code. In the following, we avoid this approximation by a step function by expressing the updating equation based on the channel coefficient of each OFDM carrier and the variable node degree (i.e. number of branches) $\zeta(k)$ of each bit modulated on the corresponding sub-carrier. The incoming means $m_u^{(l-1)}$ in the update equation above are, however, still assumed to be constant for each node. The corresponding updating equation is expressed with the help of $\phi(x)$ defined in Sae-Young Chung, T. J. Richardson, and R. Urbanke. Analysis of Sum-Product Decoding Low-Density Parity-Check Codes Using a Gaussian Approximation. IEEE Transactions on Information Theory, 47:657-670, 2001 (see same reference for low complexity approximations of $\phi(x)$)

$$\phi(x) = \begin{cases} 1 - \dfrac{1}{\sqrt{4\pi x}} \displaystyle\int_R \tanh\left(\frac{u}{2}\right) e^{-\frac{(u-x)^2}{4x}} du & \text{if } x > 0 \\ 1 & \text{if } x = 0 \end{cases}$$

$$m_u^{(l)} = \sum_{j=1}^{t_{r,max}} \rho_i \, \phi^{-1} \left\{ 1 - \underbrace{\left[ 1 - \underbrace{\frac{1}{N} \sum_{k=0}^{N-1} \left( 1 - \phi\left( m_{u_0}(c_k) + (\zeta(k)-1)m_u^{(l-1)} \right) \right)}_{=\mathbf{E}\left[\tanh\left(\frac{v^l}{2}\right)\right] \text{with } d_c = j} \right]^{j-i}}_{\mathbf{E}\left[\tanh\left(\frac{u^l}{2}\right)\right] \text{with } d_c = j} \right\}$$

$\underbrace{\qquad\qquad\qquad}_{\text{argument of } \phi^{-1}(1-x) \text{ is } 1-\mathbf{E}\left[\tanh\left(\frac{u^l}{2}\right)\right], \text{ the result is the distribution of } u \, (\text{via mean value})}$

The mean distribution is given by the sum of mean values weighted by occurance probability

The following theorem will be useful in the following:

**Theorem C.1:**

$$\phi^{-1}\left\{ 1 - \left[ \frac{1}{2}\left( 1 - \phi\left( m_{u_0}(c_k) + \varepsilon \right) + 1 - \phi\left( m_{u_0}(c_k) - \varepsilon \right) \right) \right]^{j-1} \right\} < \phi^{-1}\left\{ 1 - \left[ 1 - \phi\left( m_{u_0}(c_k) \right) \right]^{j-1} \right\}$$

**for** $\varepsilon > 0$ **and** $m_{u_0}(c_k) > 0$.

Proof of theorem C.1: $\phi(m_{u0}(c_k)+\varepsilon)+\phi(m_{u0}(c_k)-\varepsilon)>2\phi(m_{u0}(c_k))$ since $\phi'(x)<0\,\forall x>0$ and $\phi''(x)>0\,\forall x>0$ (i.e. $\phi'(x)$ decreases more slowly with increasing x). Thus,

$$1 - \frac{1}{2}\left[ \phi\left( m_{u_0}(c_k) + \varepsilon \right) + \phi\left( m_{u_0}(c_k) - \varepsilon \right) \right] < 1 - \phi\left( m_{u_0}(c_k) \right) \quad \text{with} \quad 0 < \phi(x) < 1.$$

Correspondingly,

$$1 - \left[ 1 - \frac{1}{2}\left[ \phi\left( m_{u_0}(c_k) + \varepsilon \right) + \phi\left( m_{u_0}(c_k) - \varepsilon \right) \right] \right]^{j-1} > 1 - \left[ 1 - \phi\left( m_{u_0}(c_k) \right) \right]^{j-1}$$

with $j\in (2,\cdots,t_{r,max})$ and there is equality for $j=0$. Since $\phi'(x) < 0\,\forall x>0$, it is

$$\phi^{-1}\left( 1 - \left[ 1 - \frac{1}{2}\left[ \phi\left( m_{u_0}(c_k) + \varepsilon \right) + \phi\left( m_{u_0}(c_k) - \varepsilon \right) \right] \right]^{j-1} \right) < \phi^{-1}\left( 1 - \left[ 1 - \phi\left( m_{u_0}(c_k) \right) \right]^{j-1} \right).$$

QED.  í

After a maximum number of $l = L$ iterations, the output means corresponding to carrier $k$ are calculated taking all incoming $m_u^{(L)}$ into account:

$$m_{u,k} = m_{u_0(c_k)} + \zeta(k) m_u^{(L)}$$

Prior to the calculation of the BER, we define

$$\psi(k) = \begin{cases} 2 & \text{if carrier } k \text{ carries 2 data bits} \\ 1 & \text{if carrier } k \text{ carries 1 data bit} \\ 0 & \text{if carrier } k \text{ carries 2 redundancy bits} \end{cases}$$

The BER is then calculated based on the results of Valérian Mannoni. Optimisation des codes LDPC pour les communications multi-porteuses. PhD thesis, Univeristy of Reims, Champagne-Ardenne, France, June 2004 with

$$Q(x) = \tfrac{1}{2\pi} \int_x^\infty e^{-\frac{t^2}{2}} dt :$$

$$P_e = \frac{1}{\sum\limits_{k=0}^{N-1} \psi(k)} \sum_{k=0}^{N-1} \psi(k) \int_{-\infty}^{0} \frac{1}{\sqrt{4\pi m_{u,k}}} e^{-\frac{(x - m_{u,k})^2}{4 m_{u,k}}} dx$$

$$= \frac{1}{\sum\limits_{k=0}^{N-1} \psi(k)} Q\left( \sqrt{\frac{m_{u_0(c_k)} + \zeta(k) m_u^{(L)}}{2}} \right)$$

Please note the following remarks on equations this equation:

i) $P_e$ is calculated over the data bits only; redundancy bits are not considered for the final BER.
ii) Typically, an LDPC code is larger than one OFDM symbol; still, the equation is applicable if the length of the codeword is an integer multiple of the number of bits modulated in one OFDM symbol.
iii) Both, the resulting degree distributions $\lambda(x)$ and p(x) and the data bit attribution to OFDM carriers depends on the channel coefficients **c.**
iv) Ideally, a joint optimization of $\lambda(x)$, $p(x)$ and the data bit attribution to OFDM carriers is performed. However, the optimization of the BER expression may also be performed based on a given LDPC code. In the simulation results section, it will be shown that the resulting data bit attribution to OFDM carriers can improve the code performance considerable compared to a poor choice.

If only an optimization concerning the data bit attribution to OFDM carriers is required for a given LDPC code, the upper result can be interpreted in a first approximation as follows: In order to minimize the BER, the expression

$m_{u_0(c_k)} + \zeta(k) m_u^{(L)}$ must be as large as possible. Thus,

i) since $P_e$ is calculated only over useful data bits, use lowest order nodes (i.e. $\zeta(k)$ is minimum) for redundancy nodes and maximize thus $\zeta(k)m_u^{(L)}$ .

ii) Moreover, put data bits on the strongest carriers (i.e. $|c_k|$ is maximum) in order to maximize $m_{u0}(c_k)$.

iii) Assure a maximum final $m_u^{(L)}$ . It turns out from **Theorem C.1** that this is achieved if the argument of $\phi(\cdot)$ in (13) is as homogenous as possible **(Theorem C.1** proofs for *N=2* carriers that an inhomogenous ensemble of arguments (at a constant sum) leads to a smaller final $m_u^{(L)}$ compared to a homogenous ensemble ; this proof is straightforwardly extended to any number of carriers); in particular, very small arguments should be avoided. Consequently, high order nodes (i.e. $\zeta(k)$ is large) should be attributed to small $|c_k|$ and low order nodes (i.e. $\zeta(k)$ is small) to large $|c_k|$.

This rough approximation of the above presented optimization procedure is straightforwardly implementable in hardware at an extremely low calculation complexity. However, it turns out to be sub-optimum if the channel coefficients $c_k$ vary significantly over *k*. In this case, it is often better not to attribute all lowest-order nodes to redundancy bits; as a result, $m_u^{(L)}$ is improved and may outweigh the reduced value of $\zeta(k)m_u^{(L)}$ (since some large $\xi(k)$ are 'wasted' to redundancy bits).

In some embodiments, the mapping relating the OFDM carriers to the LDPC code-words can be cyclically shifted. This may be particularly suitable for situations wherein significantly varying channel coefficients are experienced.

In particular, the above described approach may be modified such that point v) *"Defining* $(\cdot)^F$ *as an operator that reads* a *vector in* inverse *order* ..." will be modified in the following way:

Instead of using the pointer vector " $\left(\mathbf{u}_{w_K^{Data}}\right)^F$ " directly a cyclically shifted version (cyclically shifted by any number

$z \in (1,...,K\text{-}1))$ is used. Thus " $\left(\mathbf{u}_{w_K^{Data}}\right)^F$ " can be replaced by a vector whose first element is the zth element of

$\left(\mathbf{u}_{w_K^{Data}}\right)^F$ (i.e. $\left[\left(\mathbf{u}_{w_K^{Data}}\right)^F\right]_z$ ) , followed by $\left[\left(\mathbf{u}_{w_K^{Data}}\right)^F\right]_{z+1}$ , ...,

$\left[\left(\mathbf{u}_{w_K^{Data}}\right)^F\right]_{K-1}$ , $\left[\left(\mathbf{u}_{w_K^{Data}}\right)^F\right]_0$ , $\left[\left(\mathbf{u}_{w_K^{Data}}\right)^F\right]_1$ , ..., $\left[\left(\mathbf{u}_{w_K^{Data}}\right)^F\right]_{z-1}$ . A corresponding permutation is performed on the redundancy pointer vector $\left(\mathbf{u}_{w_z^{Red}}\right)^F$ too. The optimum z can be found by empirical means and specifically by trial and error using different values of z.

It will be appreciated that in some embodiments improved performance can instead be performed by the mapping controller 105 mapping LDPC symbols having higher variable node degrees to subcarriers having higher estimated channel quality and mapping LDPC symbols having lower variable node degrees to subcarriers having lower estimated channel quality. Thus, in such an embodiments, the inverse order to that proposed above is used which can be achieved by not applying the flip operator (i.e. the "()$^F$" operator in the above algorithm.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

## Claims

1. An OFDM transmitter (100) for transmitting data in OFDM symbols comprising a plurality of subcarriers, the OFDM transmitter comprising:

   means (103) for generating a Low-Density Parity Check (LDPC) codeword;
   mapping means (105) for mapping symbols of the LDPC codeword to the plurality of subcarriers in response to a channel estimate of a propagation channel between the OFDM transmitter and a receiver and a variable node degree for the symbols; and
   means (107) for transmitting the OFDM symbols to the receiver over the propagation channel.

2. The OFDM transmitter (100) claimed in claim 1 wherein the mapping means (105) is arranged to map LDPC symbols to subcarriers having higher estimated channel quality and to map LDPC redundancy symbols to subcarriers having lower estimated channel quality.

3. The OFDM transmitter (100) claimed in claim 1 or 2 wherein the mapping means (105) is arranged to map LDPC symbols having lower variable node degrees to subcarriers having higher estimated channel quality and to map LDPC symbols having higher variable node degrees to subcarriers having lower estimated channel quality.

4. The OFDM transmitter (100) claimed in claim 3 wherein the mapping means (105) is further arranged to cyclically shift the mapping between the LDPC symbols and the subcarriers.

5. The OFDM transmitter (100) claimed in any previous claim wherein the channel estimate comprises individual subcarrier channel coefficients for the subcarriers.

6. The OFDM transmitter (100) claimed in claim 5 wherein the mapping means (105) is arranged to map the LDPC symbols in response to an absolute value of the subcarrier channel coefficients.

7. The OFDM transmitter (100) claimed in any previous claim wherein the mapping means (105) comprises:

   means for dividing the subcarriers into a first set of subcarriers and a second set of subcarriers, the first set of subcarriers having channel estimates indicative of a higher channel quality than the channel estimates of the second set of subcarriers; and
   means for mapping LDPC data symbols to the first set of subcarriers and LDPC redundancy symbols to the second set of subcarriers.

8. The OFDM transmitter (100) claimed in any previous claim wherein the mapping means (105) further comprises means for mapping the LDPC data symbols to the first set of subcarriers such that LDPC data symbols having lower variable node degrees are mapped to subcarriers having channel estimates indicative of a higher channel quality than for subcarriers for LDPC data symbols having higher variable node degrees.

9. The OFDM transmitter (100) claimed in any previous claim wherein the mapping means (105) further comprises means for mapping the LDPC redundancy symbols to the first set of subcarriers such that LDPC redundancy symbols having lower variable node degrees are mapped to subcarriers having channel estimates indicative of a higher channel quality than for subcarriers for LDPC redundancy symbols having higher variable node degrees.

10. The OFDM transmitter (100) claimed in any previous claim wherein the mapping means (105) is arranged to map the LDPC codeword to a plurality of OFDM symbols.

11. The OFDM transmitter (100) claimed in any previous claim further comprising means for communicating mapping information of the mapping of the LDPC symbols to the subcarriers to the receiver.

12. The OFDM transmitter (100) claimed in any previous claim wherein the LDPC codeword is an irregular systematic LDPC codeword.

13. The OFDM transmitter (100) claimed in any previous claim wherein the means (107) for transmitting is arranged to transmit the OFDM symbols from a plurality of antennas and the mapping means (105) is arranged to map the LDPC symbols in response to different channel estimates for different antennas of the plurality of antennas.

14. The OFDM transmitter (100) claimed in any previous claim arranged to operate in accordance with the Technical Specifications for a Wireless Local Area Network (WLAN).

15. The OFDM transmitter (100) of claim 13 wherein the WLAN is an IEEE802.11n WLAN.

16. The OFDM transmitter (100) of any previous claim further comprising:

means for receiving propagation characteristics for the propagation channel from the receiver; and
means for generating the channel estimate in response to the propagation characteristics.

17. The OFDM transmitter (100) of any previous further comprising:

means for determining propagation characteristics in response to a signal received from the receiver; and
means for generating the channel estimate in response to the propagation characteristics.

18. An OFDM receiver (200) for receiving data in OFDM symbols comprising a plurality of subcarriers, the OFDM receiver comprising

means (201) for receiving the OFDM symbols from a transmitter (100) over a propagation channel; and
means (205) for generating a Low-Density Parity Check (LDPC) codeword from at least one received OFDM symbols;
wherein the means for generating the LDPC codeword comprises
means (203) for mapping the plurality of subcarriers to symbols of the LDPC codeword in response to a channel estimate of the propagation channel and a variable node degree for the symbols.

19. The OFDM receiver (200) as claimed in claim 18 further comprising:

means (207) for estimating propagation characteristics of the propagation channel in response to a signal received from the transmitter (100); and
means for generating the channel estimate in response to the propagation characteristics.

20. The OFDM receiver (200) of claim 18 or 19 further comprising means for generating a mapping between the subcarriers and the symbols of the LDPC codeword; and means for transmitting the mapping to the transmitter.

21. A method of transmitting data in OFDM (Orthognal Frequency Domain Multiplex) symbols comprising a plurality of subcarriers, the method comprising:

generating a Low-Density Parity Check (LDPC) codeword;
mapping symbols of the LDPC codeword to the plurality of subcarriers in response to a channel estimate of a propagation channel between the OFDM transmitter and a receiver and a variable node degree for the symbols; and
transmitting the OFDM symbols to the receiver over the propagation channel.

EP 1 783 942 A1

```
  ┌──────────┐      ┌──────────┐      ┌──────────┐      ┌──────────┐
  │   Data   │      │   LDPC   │      │ Mapping  │      │   OFDM   │
  │  Source  │─────▶│Processor │─────▶│Processor │─────▶│    RF    │───── Y
  │          │      │          │      │          │      │Transmitter│
  └──────────┘      └──────────┘      └──────────┘      └──────────┘
      101              103                105     ▲         107      │
                                                  │                  │
                                         ┌──────────┐                │
                                         │ Channel  │                │
                                         │Estimator │◀───────────────┘
                                         └──────────┘
                                             109
```

100

FIG. 1

EP 1 783 942 A1

**200**

**FIG. 2**

MODULATOR

DEMODULATOR

FIG. 3

$\tilde{s}_N(k)$    $s_N(k)$    $s_P(k)$

$r_P(k)$    $\tilde{r}_N(k)$

$\tilde{s}_0(k)$
$\tilde{s}_1(k)$

$s_0(k)$
$s_1(k)$
$s_2(k)$

P/S

S/P    $r_0(k)$

$\mathbf{F}_N^H$

$\tilde{s}_{N-1}(k)$

$s_{N-1}(k)$

Demodulation & Equalization

$\tilde{r}_0(k)$

$s_n$    $s(t)$    $n(t)$    $r(t)$    $r_n$

DAC    C(k)    ⊕    ADC

sampling
rate $T$

sampling
rate $T$

constant
postfix

$c_0 \cdot \alpha(k)$

$c_{D-1} \cdot \alpha(k)$

$r_{N+D-1}(k)$    $\tilde{r}_{N-1}(k)$

modulation

postfix
insertion

parallel
to serial
conversion

digital to
analog
converter

analog to
digital
converter

serial to
parallel
conversion

demodulation
and
equalization

21

code
word

parity
check

FIG. 4

FIG. 5

LDPC evaluation, R=1/2, TGnSync code, 576 bits codeword length, TGn-D channel, BPS

Legend:
- 50 decoding iterations, no carrier sort
- 50 decoding iterations, with carrier sort
- 15 decoding iterations, no carrier sort
- 15 decoding iterations, with carrier sort

Y-axis: BER

X-axis: SNR(Es/N0)

FIG. 6

EP 1 783 942 A1

**European Patent Office**

## EUROPEAN SEARCH REPORT

Application Number

EP 05 29 2370

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/203721 A1 (BEREZDIVIN ROBERTO ET AL) 30 October 2003 (2003-10-30)<br><br>* page 4, left-hand column, paragraph 49 - right-hand column, paragraph 51 *<br>* page 5, right-hand column, paragraph 63 - page 6, left-hand column, paragraph 64 *<br>* page 6, right-hand column, paragraph 80 - paragraph 83 *<br>----- | 1,5,6, 10,11, 13,14, 16-21 | H04L1/00<br>H04L27/26 |
| A | US 2005/034053 A1 (JACOBSEN ERIC A ET AL) 10 February 2005 (2005-02-10)<br>* page 2, right-hand column, paragraph 25 - paragraph 27 *<br>* page 2, left-hand column, paragraph 44 - paragraph 47 *<br>----- | 1,18,21 | |
| A | YOSHIMOCHI N ET AL: "LDPC coded unitary space-time modulated OFDM system in broadband mobile channel"<br>ELECTRONICS LETTERS, IEE STEVENAGE, GB, vol. 39, no. 13,<br>26 June 2003 (2003-06-26), pages 994-995, XP006020567<br>ISSN: 0013-5194<br>* the whole document *<br>----- | 1,18,21 | **TECHNICAL FIELDS SEARCHED (IPC)**<br><br>H04L |

The present search report has been drawn up for all claims

| Place of search | Date of completion of the search | Examiner |
|---|---|---|
| The Hague | 22 February 2006 | Papantoniou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 29 2370

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2006

| Patent document cited in search report | | Publication date | Patent family member(s) | | Publication date |
|---|---|---|---|---|---|
| US 2003203721 | A1 | 30-10-2003 | AU 2003231146 | A1 | 10-11-2003 |
| | | | CA 2480847 | A1 | 06-11-2003 |
| | | | CN 1666453 | A | 07-09-2005 |
| | | | EP 1497942 | A1 | 19-01-2005 |
| | | | WO 03092212 | A1 | 06-11-2003 |
| US 2005034053 | A1 | 10-02-2005 | WO 2005018187 | A2 | 24-02-2005 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2003

### Non-patent literature cited in the description

- **A. AKANSU ; P. DUHAMEL ; X. LIN ; M. DE COURVILLE.** Orthogonal Transmultiplexers in Communication : A Review. *IEEE Trans. on Signal Processing,* vol. 463 (4), 979-995
- **M. LUBY ; M. MITZENMACHER ; A. SHOKROLLAHI ; D. SPIELMANN.** Analysis of low-density codes and improved designs using irregular graph. *Proc. 30th Annual ACM Symposium on Theory of Computing,* 1998, 249-258
- **SAE-YOUNG CHUNG ; T. J. RICHARDSON ; R. URBANKE.** Analysis of Sum-Product Decoding Low-Density Parity-Check Codes Using a Gaussian Approximation. *IEEE Transactions on Information Theory,* 2001, vol. 47, 657-670
- **J. HAGENAUER ; E. OFFER ; L. PAPKE.** Iterative decoding of binary block and convolutional codes. *IEEE Transactions on Information Theory,* 1996, vol. 42, 429-445
- **C. R. HARTMANN ; L. D. RUDOLPH.** An optimum symbol-by-symbol decoding rule for linear codes. *IEEE Transactions on Information Theory,* 1976, vol. IT-22, 514-517
- **YOUNG CHUNG ; T. J. RICHARDSON ; R. URBANKE.** Analysis of Sum-Product Decoding Low-Density Parity-Check Codes Using a Gaussian Approximation. *IEEE Transactions on Information Theory,* 2001, vol. 47, 657-670
- **SAE-YOUNG CHUNG ; T. J. RICHARDSON ; R. URBANKE.** Analysis of Sum-Product Decoding Low-Density Parity-Check Codes Using a Gaussian Approximation. *IEEE Transactions on Information Theory,* 2001, vol. 47, 657-670